# EUROPEAN PATENT APPLICATION

(11) **EP 4 432 304 A1**
(43) Date of publication of application: **18.09.2024**
(21) Application number: 22882340.7
(22) Date of filing: 30.06.2022
(51) Int. Cl.: G21D 3/00

(54) **ELECTRICAL POWER SUPPLY CHANGEOVER TEST METHOD, APPARATUS AND DEVICE FOR NUCLEAR POWER PLANT**

(30) Priority: 18.10.2021 CN 202111208236
(71) Applicant: China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: ZHANG, Li Qiang, Shenzhen, Guangdong 518124 (CN); ZHU, Meng Zi, Shenzhen, Guangdong 518124 (CN); GAN, Long, Shenzhen, Guangdong 518124 (CN); WANG, Chen, Shenzhen, Guangdong 518124 (CN); YAN, Xu, Shenzhen, Guangdong 518124 (CN); YAN, Tian Peng, Shenzhen, Guangdong 518124 (CN); JIANG, Tao, Shenzhen, Guangdong 518124 (CN); ZHAO, Yan, Shenzhen, Guangdong 518124 (CN)
(74) Representative: Greaves Brewster LLP
(86) International application number: PCT/CN2022/102852
(87) International publication number: WO 2023/065718

(57) **Abstract**

The present invention provides an electrical power supply changeover test method, apparatus and device for nuclear power plant. The electrical power supply changeover test method for nuclear power plant includes the steps of: configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a plant power supply in an auxiliary standby transformer power supply mode (S101); executing the BAS56 test, and obtaining a final state of the BAS56 test after the BAS56 test ends (S102); in the final state of the BAS56 test, realizing fast power cut-off and transmission between adjacent units of a common load for a plant of a nuclear power unit via fast power supply changeover technology which simulates automatic changeover (S103); and executing the BAS54 test by taking the final state of the BAS56 test as the initial state of the BAS54 test (S104). According to the electrical power supply changeover test method of the present invention, the deep decoupling of an electrical power supply changeover test for a plant from a grid-related test can be realized, such that the degree of association between the electrical power supply changeover test for a plant and grid-related work is reduced, thereby realizing the high flexibility of a test window, and further improving the test efficiency, simplifying test operations, and reducing test risks.

## Description

### FIELD OF THE INVENTION

The present invention generally relates to nuclear power plants and, more particularly, relates to an electrical power supply changeover test method, apparatus and device for a nuclear power plant.

### BACKGROUND OF THE INVENTION

Under the condition the nuclear power plant lose normal power outside the plant, in order to restore the capability of forced circulation of the primary circuit and the core heat export, the reactor coolant pump needs to be started by auxiliary standby transformer power supply. Therefore, the nuclear power plant is provided with a reactor coolant pump, to realize the verification of power supply capability of auxiliary standby transformer to maintain the heat shutdown condition of primary circuit and the vacuum condition of condenser via the start-up test of the auxiliary step-down transformer (hereinafter referred as BAS54). When the reactor is under a thermal shutdown condition, the test is used to maintain the hot shutdown condition of the primary circuit and the vacuum condition of the condenser by starting auxiliary devices such as RCP001PO, CRF001PO, CEX001PO, SEN, SRI, CVI, CET, GGR, and GHE.

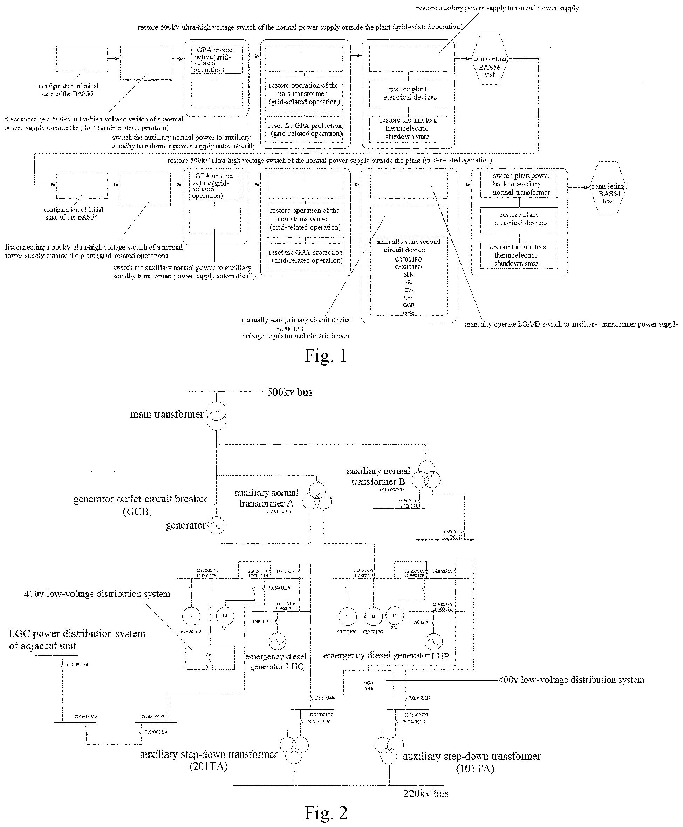

In order to avoid a low temperature of the primary circuit caused by the loss of the reactor coolant pump for a long time due to the long period of the power changeover test during the hot state function test phase, BAS56 and BAS54 in the power supply changeover test in the hot state function test phase in the prior art are tested twice. After the BAS56 test is completed, it is necessary to restart three main coolant pumps to heat the working fluid of the primary circuit, so that the Bas54 test can be carried out after the reactor has been brought back to the standard thermal shutdown condition. The period of single test is shortened by means of staged tests, to realize the temperature control of the primary circuit finally. The electrical power supply changeover method of the prior art is shown in Fig. 1.

The BAS54 test in the prior art is carried out when the reactor is under thermal shutdown condition, the 500kv ultra-high voltage power supply switch is switched off to trigger automatic switching action of the auxiliary standby transformer, and the power supply for a plant starts the devices, such as RCP001PO, RCP001PO, CRF001PO, CEX001PO, SEN, SRI, CVI, CET, GGR, GHE, in the auxiliary standby transformer supply mode. Because the test process involves a large number of network-related device operations, the test window requirements are strict, and the requirements to the test operation accuracy and effectiveness are quite high. Because of the complexity of the test operation, the test risk increases, and the test process needs a lot of manpower. The power supply distribution of auxiliary loads for maintaining primary circuit thermal shutdown and condenser vacuum conditions in a nuclear power plant is shown in Fig. 2.

The conventional electrical power changeover test method in the hot-state function test phase of the prior art has the following disadvantages:
1) The flexibility and continuity of the test operation window are poor. The test method involves the operation of power grid device. Due to the restriction of the power grid operation, the flexibility of the test execution window is poor. At the same time, the continuous working condition of the test method is poor, which is not conducive to the main line duration control of the thermal function test.
2) The cost of the electrical power consumption, desalination water production and wastewater treatment during commissioning is increased.
3) The fuel consumption of the diesel generator is increased: before BAS56 and BAS54 tests are coupled, two 6,000kw emergency diesel generator need to be activated in both tests, which will increase diesel generator fuel consumption.
4) The number of test impact of the electrical device and process device is increased, which will increase the loss of industrial device.
5) The number of impact of the main pump and the circulating pump due to loss of the auxiliary system under the transient switching of electrical power supply is increased.
6) The risk of misoperation is increased. The restoration operation of the additional power supply outside the plant, the power distribution system for a plant, the plant load, and the re-uplink of the unit, involves more systems to be restored. There is a risk of human error operation.
7) Labor cost is increased. The re-uplink of the unit involves more than 50 systems of the process, electrical and instrumentation to be restored. Considering the configuration of at least 2 people for each system, after the test coupling, about 200 labor days of labor costs can be saved.

### SUMMARY OF THE INVENTION

In view of the foregoing, one object of the present invention is to provide an electrical power supply changeover test method, apparatus and device for nuclear power plant.

According to one embodiment of the present invention, an electrical power supply changeover test method for a nuclear plant includes the steps of:
configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a power supply for a plant in an auxiliary standby transformer power supply mode;
executing the BAS56 test, and obtaining a final state of the BAS56 test after the BAS56 test ends;
in the final state of the BAS56 test, realizing fast power cut-off and transmission between adjacent units of a common load for a plant of a nuclear power unit via fast power supply changeover technology which simulates automatic changeover; and
executing the BAS54 test by taking the final state of the BAS56 test as the initial state of the BAS54 test.

According to one aspect of the present invention, the step of executing the BAS56 test includes the steps of:
disconnecting a 500kV ultra-high voltage switch of a normal power supply outside the plant;
starting GPA protection action, to switch the power supply for a plant to auxiliary standby transformer power supply automatically;
restoring the 500kV ultra-high voltage switch of the normal power supply outside the plant, restoring operation of the main transformer, and resetting the GPA protection; and
completing the BAS56 test.

According to one aspect of the present invention, for a public distribution panel 7LGI of the unit, the step of realizing fast power cut-off and transmission between adjacent units of a common load for a plant of a nuclear power unit via fast power supply changeover technology which simulates automatic changeover, includes the steps of:
confirming that downstream medium voltage rotating load of 7LGI power supply has been stopped;
using a test box to verify 7LGIB001 JA test bit opening and closing operation;
putting 7LGIB001JA in working position and preparing for fast power supply changeover operation;
disconnecting 7LGIA001JA and confirming electricity loss of 7LGI, closing 7LGIB001JA on site after a preset time, 7LGI reversing power to a LGC power supply of a adjacent unit for operation, wherein when 7LGIB001JA is not closed successfully, 7LGI fails to be switched to LGC power supply of an adjacent unit, the 7LGIA001JA switch has been disconnected and placed in an isolated position, to disconnect the DC power supply of the 7LGIA001JA switch and execute operation of powering 7LGI by 7LGIB;
restoring the downstream medium voltage rotating load of 7LGI power.

According to one aspect of the present invention, the step of executing the BAS54 test includes the steps of:
operating LGA/D switch to auxiliary transformer power supply for operation, and starting a primary circuit device and a second circuit device in turn;
switching power supply for a plant back to auxiliary normal transformer power supply, restoring plant electrical devices, and restoring the unit to a thermoelectric shutdown state; and
completing the BAS54 test.

According to one aspect of the present invention, the electrical power supply changeover test method further includes:
when temperature of the primary circuit drops to a warning value, activating RCP001PO via an auxiliary standby transformer to maintain the temperature of the primary circuit; and
if not feasible, restoring GEV to power medium voltage distribution system, so that operators can start one or more main pumps via a main power supply to maintain temperature and pressure of the primary circuit.

According to one aspect of the present invention, the electrical power supply changeover test method further includes:
keeping LHP and LHQ emergency diesel generator in a hot standby state in initial state of the test, to ensure that when the power supply for a plant fails to switch to auxiliary standby transformer, LHP/LHQ emergency automatically start to power the main pump shaft seal and heat shield related devices.

According to one aspect of the present invention, when LGB fails to switch to the auxiliary standby transformer, the status of the unit is controlled via the steps of:
checking to confirm that LHA is powered by LHP emergency diesel generator for operation;
checking to confirm that RCV/RRI/SEC continue to run;
performing RCV and ASG regulation operation, to stabilize the temperature and the pressure of the primary circuit;
restoring LGB to be powered by auxiliary standby transformer;
restoring GEW/GEV power supply;
restoring power supply for a plant to be powered by normal power supply;
reconfiguring test conditions in accordance with the initial state to re-execute the test.

According to one aspect of the present invention, when LGC fails to switch to the auxiliary standby transformer, the status of the unit is controlled via the steps of:
checking to confirm that LHB is powered by LHQ emergency diesel generator;
checking to confirm that RCV/RRI/SEC continues to run;
performing RCV and ASG regulation operation, to stabilize the temperature and the pressure of the primary circuit;
restoring LGC to be powered by auxiliary standby transformer;
restoring GEW/GEV power supply;
restore power supply for a plant to be powered by normal power supply;
reconfiguring test conditions in accordance with the initial state to re-execute the test.

According to one aspect of the present invention, when LGB/LGC fails to switch to the auxiliary standby transformer, the status of the unit is controlled via the steps of:
checking to confirm that LHA is powered by a LHP emergency diesel generator;
checking to confirm that LHB is powered by a LHQ emergency diesel generator;
checking to confirm that RCV/RRI/SEC continues to run;
performing RCV and ASG regulation operation, to stabilize the temperature and the pressure of the primary circuit;
restoring LGB to be powered by auxiliary standby transformer;
restoring LGC to be powered by auxiliary standby transformer;
restoring GEW/GEV power supply;
restoring power supply for a plant to be powered by normal power supply;
reconfiguring test conditions in accordance with the initial state to re-execute the test.

According to one aspect of the present invention, when LHA fails to switch to LHP, the status of the unit is controlled via the steps of:
checking to confirm that LHB is powered by LHQ emergency diesel generator;
checking to confirm that RCV/RRI/SEC continues to run;
performing RCV and ASG regulation operation, to stabilize the temperature and the pressure of the primary circuit;
restoring LGB to be powered by auxiliary standby transformer;
restoring GEW/GEV power supply;
restoring power supply for a plant to be powered by normal power supply;
reconfiguring test conditions in accordance with the initial state to re-execute the test.

According to one aspect of the present invention, when LHB fails to switch to LHQ, the status of the unit is controlled via the steps of:
checking to confirm that LHA is powered by LHP emergency diesel generator;
checking to confirm that RCV/RRI/SEC continues to run;
performing RCV and ASG regulation operation, to stabilize the temperature and the pressure of the primary circuit;
restoring LGC to be powered by auxiliary standby transformer;
restoring GEW/GEV power supply;
restoring power supply for a plant to be powered by normal power supply;
reconfiguring test conditions in accordance with the initial state to re-execute the test.

According to one aspect of the present invention, when LHA/LHB fail to switch to LHP/LHQ, the unit enters a SBO working condition and the unit status of the unit is controlled via the steps of:
configuring RRI/SEC in two columns to run before the test, and putting standby functions between the columns into operation;
recording status of RCV device;
restoring LGB/LHA to be powered by auxiliary standby transformer, or restoring LGC/LHB to be powered by auxiliary standby transformer;
checking to confirm that RCV/RRI/SEC continues to run, otherwise starting manually;
checking seal injection flow of RCP pump, wherein if the main pump shaft seal water is not established within 2 min, do not establish shaft seal water;
performing RCV and ASG regulation operation, to stabilize the temperature and the pressure of the primary circuit;
continuing to restore other power supply series to be powered by auxiliary standby transformer;
restoring power supply for a plant to be powered by normal power supply;
reconfiguring test conditions in accordance with the initial state to re-execute the test.

According to one aspect of the present invention, the electrical power supply changeover test method further includes simulating loss of main power supply outside the plant when BAS56 and Bas54 cannot be executed under a same task window, wherein the step of simulating loss of main power supply outside the plant includes the steps of:
disconnecting LGE001JA, LGF001JA via a main control room DCS under a hot shutdown working condition of the primary circuit of the unit;
after disconnecting LGE001JA, LGF001JA, the main control room DCS disconnecting LGA001JA and LGD001JA synchronously to trigger LGB/C switch to auxiliary standby transformer power supply automatically and synchronously;
continuing BAS54 test in auxiliary standby transformer power supply mode, and starting RCP001PO, CRF001PO , CEX001PO , SEN , SRI , CVI , CET , GGR , GHE auxiliary devices to maintain a hot shutdown working condition of the primary circuit and the vacuum condition of a condenser.

Another embodiment of the present invention provides an electrical power supply changeover test apparatus for a nuclear plant including:
a configuration unit, for configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a power supply for a plant in an auxiliary standby transformer power supply mode;
a BAS56 test unit, for executing the BAS56 test, and obtaining a final state of the BAS56 test after the BAS56 test ends;
a fast power supply changeover unit, for realizing fast power cut-off and transmission between adjacent units of a common load for a plant of a nuclear power unit via fast power supply changeover technology which simulates automatic changeover in the final state of the BAS56 test;
a BAS54 test unit, for executing the BAS54 test by taking the final state of the BAS56 test as the initial state of the BAS54 test.

Yet another embodiment of the present invention also provides an electrical power supply changeover test device for a nuclear power plant including a memory having a computer program stored therein and a processor, wherein the computer program can be executed by the processor to implement the electrical power supply changeover test method for nuclear power plant of anyone of the present invention.

According to the embodiments of the present invention, the deep decoupling of an electrical power supply changeover test for a plant from a grid-related test can be realized, such that the degree of association between the electrical power supply changeover test for a plant and grid-related work is reduced, thereby realizing the high flexibility of a test window, and further improving the test efficiency, simplifying test operations, and reducing test risks. The investment in manpower, power consumption, diesel generator fuel consumption, desalination water production and process wastewater treatment is reduced, thereby saving more than 2 days of the main line period in the nuclear power unit commissioning start-up process hot state function test phase, which can remarkably reduce cost and increase efficiency.

### BRIEF DESCRIPTION OF THE DRAWINGS

In order to explain the technical solution of the embodiments of the present invention more clearly, the attached drawings which are used in the embodiments of the present invention will briefly described below. It should be understood that, only some embodiments of the present invention are shown in the attached drawings. Therefore, the drawings should not be seen as a limitation of scope of the present invention. For one ordinary skilled in the art, other relevant drawings can also be obtained without creative work based on these drawings.
Fig. 1 is a flow chart of an electrical power supply changeover test method for a nuclear power plant in the prior art;
Fig. 2 is a schematic diagram of auxiliary load distribution for a prior nuclear power plant, to maintain a hot shutdown working condition and a vacuum condition of a condenser;
Fig. 3 is a flowchart of an electrical power supply changeover test method for a nuclear power plant according to a first embodiment of the present invention;
Fig. 4 is another flowchart of an electrical power supply changeover test method for a nuclear power plant according to a first embodiment of the present invention;
Fig. 5 is a schematic flow diagram of a fast power supply changeover method for 7LGI which simulates automatic changeover;
Fig. 6 is a flow diagram of an emergency response plan for a low-temperature primary circuit;
Fig. 7 is a schematic diagram of a processing method when the electrical power supply changeover fails;
Fig. 8 is a flow diagram for simulating the loss of main power supply outside the plant; and
Fig. 9 is a structure schematic diagram of an electrical power supply changeover test apparatus for a nuclear power plant according to a second embodiment of the present invention.

### DETAILED DESCRIPTION OF THE INVENTION

In order to make the objects, technical solution and advantages of the embodiments of the present invention clearer, the technical solutions of the present invention will be described clearly and completely in the following in view of the attached drawings. It should be understood that, the embodiments described as following are only part of the embodiments of the present invention, not all embodiments of the present invention. Based on the embodiments of the present invention, all other embodiments can also be obtained by one ordinary skilled in the art without creative work. These embodiments all fall within the scope of protection of the present invention. Therefore, the following detailed description of the embodiments of the present invention provided in the attached drawings is not intended to limit the scope of the present invention, but merely represent selected embodiments of the present invention. Based on the embodiments of the present invention, all other embodiments obtained by one ordinary skilled in the art without creative work, also fall within the scope of the present invention.

The embodiments of the present invention provides an electrical power supply changeover test method, apparatus and device for nuclear power plant, which can reduce the degree of association between the electrical power supply changeover test for a plant and grid-related work, realize decoupling of BAS54 test from a grid-related operation, improve flexibility of a test window, reduce test operation risk, improve the test efficiency, and reduce operation cost.

In particular, since it takes less than 1.5 seconds for the residual voltage U of LGB/C to drop to 0.4un when switching between auxiliary normal transformer and auxiliary standby transformer in the BAS56 test, it should be put into operation as much as possible before the test, to test the project in extreme cases. In BAS56 test, public distribution panel 7LGI of the unit is powered by the test unit. However, in BAS54 test, due to the power supply mode of auxiliary standby transformer, when the main pump needs to be started by auxiliary standby transformer, 7LGI should be switched to adjacent units for power supply. After the power supply for the plant is switched to auxiliary standby transformer power supply in the hot test stage, because the core has no residual heat, the core loses heat source after the main pump is shut down. In addition, due to the natural cooling of the primary circuit, the temperature and the pressure of the primary circuit will slowly decrease. In serious cases, the temperature and the pressure of the primary circuit will go beyond the limit of the operating parameters, which leads to unexpected trigger of the reactor protection system. In accordance with normal operation of the power supply changeover mode, strict implementation of the operation and power transmission shutdown regulations are needed, which will last for a long time. In order to realize the coupling between BAS56 and BAS54, 7LGI must be switched to adjacent unit immediately for power supply after power supply for a plant is switched to auxiliary standby transformer power supply and the unit is in a steady state.

In case that BAS56 and Bas54 execute under two task windows, to realize the deep decoupling between BAS54 and grid-related operation, the operating condition of nuclear power unit without main power supply outside the plant is simulated comprehensively, to start auxiliary devices, such as RCP001PO, CRF001PO, CEX001PO, SEN, SRI, CVI, CET, GGR, GHE in auxiliary standby transformer power supply mode, and maintain a hot shutdown working condition of the primary circuit and the vacuum condition of the condenser.

In order to facilitate the understanding of the present invention, the present invention will be described in more detail below. Some terms in the present invention are described below.
BAS--Electrical Power Supply Changeover Test
ASG--Auxiliary Feedwater
RCP--Reactor Cooling System
RCV--Chemical and Volume Control
RRI--Component Cooling
SEC--Essential Service Water
CRF --Circulating Water System
CEX--Condensate Extraction System
GGR--Turbine Lubrication, Jacking and Turning System
GHE--Generator Seal Oil System
CVI--Condenser Vacuum System
SEN--Auxiliary Cooling Water System
SRI--Conventional Island Closed Cooling Water System
CET--Turbine Gland System
GEV-Power Transmission System
GEW--500kV ultra High Voltage Distribution System
LGA, LGB, LGC, LGD, LGE, LGF--CI Medium-Voltage Normal Distribution System
LGB001JA, LGC001JA --the Auxiliary Normal Transformer Power Side Tie Breaker of CI Medium-Voltage Normal Distribution System
LGB102JA, LGC102JA--the Auxiliary Standby Transformer Power Side Incoming Breaker of CI Medium-Voltage Normal Distribution System
7LGJ--BOP Medium-Voltage Normal switchboard
LHA, LHB--NI Medium-Voltage Distribution Board Emergency Power Supply System
LHP--A Medium-Voltage AC Emergency Power Supply - Diesel - Train A
LHQ--Medium-Voltage AC Emergency Power Supply - Diesel - Train B
GPA--Generator and Power Transmission Protection System
TS--Auxiliary Normal Transformer
TA--Auxiliary Standby Transformer
power supply for a plant including the Auxiliary Normal Power, the Auxiliary Standby Power and the Auxiliary Emergency Power
DCS--Distributed Control System

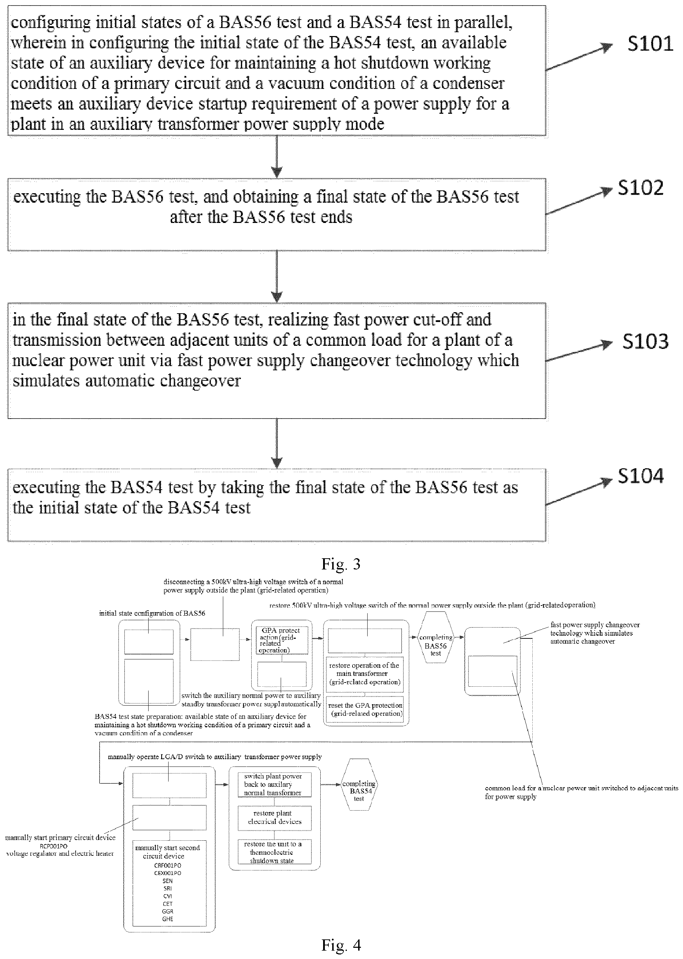

Referring to Figs. 3 and 4, a first embodiment of the present invention provides an electrical power supply changeover test method for a nuclear power plant, including the steps of:
S101: configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a power supply for a plant in an auxiliary standby transformer power supply mode.
S102: executing the BAS56 test, and obtaining a final state of the BAS56 test after the BAS56 test ends;
wherein the step of executing the BAS56 test includes the steps of:
   disconnecting a 500kV ultra-high voltage switch of a normal power supply outside the plant;
   starting GPA protection action, to switch the power supply for a plant to auxiliary standby transformer power supply automatically;
   restoring the 500kV ultra-high voltage switch of the normal power supply outside the plant, restoring operation of the main transformer, and resetting the GPA protection; and
   completing the BAS56 test.

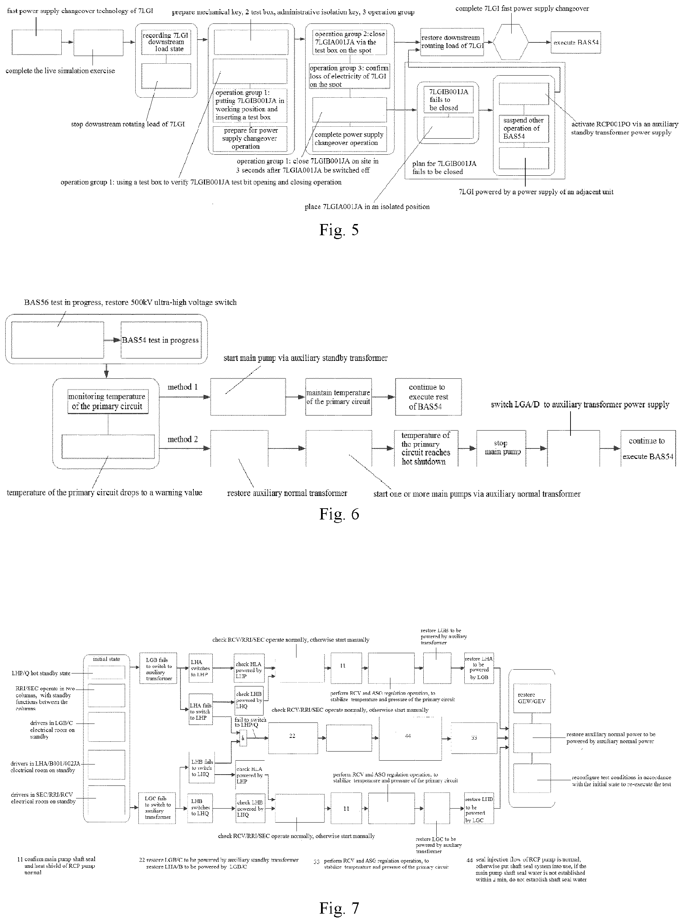

S103: in the final state of the BAS56 test, realizing fast power cut-off and transmission between adjacent units of a common load for a plant of a nuclear power unit via fast power supply changeover technology which simulates automatic changeover.
wherein, as shown in Fig. 5, for a public distribution panel 7LGI of the unit, the fast power supply changeover technology which simulates automatic changeover includes:
confirming that downstream medium voltage rotating load of 7LGI power supply has been stopped;
using a test box to verify 7LGIB001JA test bit opening and closing operation;
putting 7LGIB001JA in working position and preparing for fast power supply changeover operation;
disconnecting 7LGIA001JA and confirming electricity loss of 7LGI, closing 7LGIB001JA on site after a preset time (such as 3 seconds), 7LGI reversing power to a LGC power supply of a adjacent unit for operation.

In the present embodiment, when 7LGIB001JA is not closed successfully, 7LGI fails to be switched to LGC power supply of an adjacent unit, the 7LGIA001JA switch has been disconnected and placed in an isolated position, to disconnect the DC power supply of the 7LGIA001JA switch and execute operation of powering 7LGI by 7LGIB.

The downstream medium voltage rotating load of 7LGI power is restored.

S104: executing the BAS54 test by taking the final state of the BAS56 test as the initial state of the BAS54 test.

In the present embodiment, the step of executing the BAS54 test includes:
operating LGA/D switch to auxiliary standby transformer power supply for operation, and starting a primary circuit device and a second circuit device in turn;
switching power supply for a plant back to auxiliary normal transformer power supply, restoring plant electrical devices, and restoring the unit to a thermoelectric shutdown state; and
completing the BAS54 test.

In view of the foregoing, According to the embodiments of the present invention, the deep decoupling of an electrical power supply changeover test for a plant from a grid-related test can be realized, such that the degree of association between the electrical power supply changeover test for a plant and grid-related work is reduced, thereby realizing the high flexibility of a test window, and further improving the test efficiency, simplifying test operations, and reducing test risks. The investment in manpower, power consumption, diesel generator fuel consumption, desalination water production and process wastewater treatment is reduced, thereby saving more than 2 days of the main line period in the nuclear power unit commissioning start-up process hot state function test phase, which can remarkably reduce cost and increase efficiency.

To facilitate understanding of the present invention, some preferred embodiments of the present invention will be further described as following.

In the above embodiments, the adjustment of the test logic sequence also increases the risk concern during test execution. Although the 7LGI reverse operation is simplified, the test may still face a prolonged period of time, causing the primary circuit temperature to drop to a threshold. Therefore, manual intervention by the operator is required. In a preferred embodiment, as shown in Fig. 6, a low-temperature emergency operation of primary circuit is described as following.

The temperature of the primary circuit is raised appropriately before the start of the test, and the temperature of the primary circuit is closely monitored during the test. When the temperature of the primary circuit drops to a warning value, to prevent the temperature of the primary circuit from further dropping, the RCP001PO is started by auxiliary standby transformer, to maintain the temperature of the primary circuit. If not feasible, GEV should be restored as soon as possible to power medium voltage distribution system, so that operators can manually start one or more main pumps via the main power supply to maintain the temperature and pressure of the primary circuit.

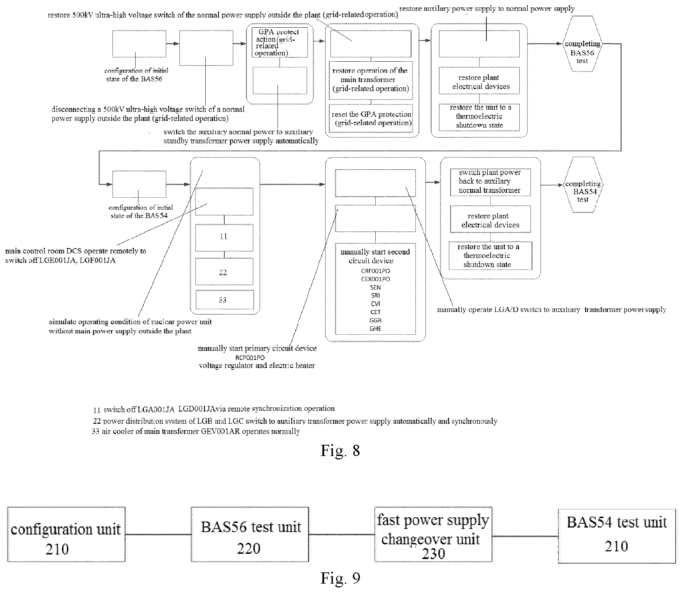

In order to keep the shaft seal and heat shield of the main pump from being lost, as shown in Fig. 7, one embodiment of the present invention also includes:
keeping LHP and LHQ emergency diesel generator in a hot standby state in initial state of the test, to ensure that when the power supply for a plant fails to switch to auxiliary standby transformer, LHP/LHQ emergency automatically start to power the main pump shaft seal and heat shield related devices.
wherein when LGB fails to switch to the auxiliary standby transformer, the status of the unit is controlled via the steps of:
   checking to confirm that LHA is powered by LHP emergency diesel generator for operation;
   checking to confirm that RCV/RRI/SEC continue to run;
   performing RCV and ASG regulation operation, to stabilize the temperature and the pressure of the primary circuit;
   restoring LGB to be powered by auxiliary standby transformer;
   restoring GEW/GEV power supply;
   restoring power supply for a plant to be powered by normal power supply;
   reconfiguring test conditions in accordance with the initial state to re-execute the test.
   wherein when LGC fails to switch to the auxiliary standby transformer, the status of the unit is controlled via the steps of:
      checking to confirm that LHB is powered by LHQ emergency diesel generator;
      checking to confirm that RCV/RRI/SEC continues to run;
      performing RCV and ASG regulation operation, to stabilize the temperature and the pressure of the primary circuit;
      restoring LGC to be powered by auxiliary standby transformer;
      restoring GEW/GEV power supply;
      restore power supply for a plant to be powered by normal power supply;
      reconfiguring test conditions in accordance with the initial state to re-execute the test.
      wherein when LGB/LGC fail to switch to the auxiliary standby transformer, the status of the unit is controlled via the steps of:
         checking to confirm that LHA is powered by a LHP emergency diesel generator;
         checking to confirm that LHB is powered by a LHQ emergency diesel generator;
         checking to confirm that RCV/RRI/SEC continues to run;
         performing RCV and ASG regulation operation, to stabilize the temperature and the pressure of the primary circuit;
         restoring LGB to be powered by auxiliary standby transformer;
         restoring LGC to be powered by auxiliary standby transformer;
         restoring GEW/GEV power supply;
         restoring power supply for a plant to be powered by normal power supply;
         reconfiguring test conditions in accordance with the initial state to re-execute the test.
         when LHA fails to switch to LHP, the status of the unit is controlled via the steps of:
            checking to confirm that LHB is powered by LHQ emergency diesel generator;
            checking to confirm that RCV/RRI/SEC continues to run;
            performing RCV and ASG regulation operation, to stabilize the temperature and the pressure of the primary circuit;
            restoring LGB to be powered by auxiliary standby transformer;
            restoring GEW/GEV power supply;
            restoring power supply for a plant to be powered by normal power supply;
            reconfiguring test conditions in accordance with the initial state to re-execute the test.
            wherein when LHB fails to switch to LHQ, the status of the unit is controlled via the steps of:
               checking to confirm that LHA is powered by LHP emergency diesel generator;
               checking to confirm that RCV/RRI/SEC continues to run;
               performing RCV and ASG regulation operation, to stabilize the temperature and the pressure of the primary circuit;
               restoring LGC to be powered by auxiliary standby transformer;
               restoring GEW/GEV power supply;
               restoring power supply for a plant to be powered by normal power supply;
               reconfiguring test conditions in accordance with the initial state to re-execute the test.
               wherein when LHA/LHB fail to switch to LHP/LHQ, the unit enters a SBO working condition and the unit status of the unit is controlled via the steps of:
                  configuring RRI/SEC in two columns to run before the test, and putting standby functions between the columns into operation;
                  recording status of RCV device;
                  restoring LGB/LHA to be powered by auxiliary standby transformer, or restoring LGC/LHB to be powered by auxiliary standby transformer;
                  checking to confirm that RCV/RRI/SEC continues to run, otherwise starting manually;
                  checking seal injection flow of RCP pump, wherein if the main pump shaft seal water is not established within 2 min, do not establish shaft seal water;
                  performing RCV and ASG regulation operation, to stabilize the temperature and the pressure of the primary circuit;
                  continuing to restore other power supply series to be powered by auxiliary standby transformer;
                  restoring power supply for a plant to be powered by normal power supply;
                  reconfiguring test conditions in accordance with the initial state to re-execute the test.
                  when BAS56 and Bas54 cannot be executed under a same task window, the electrical power supply changeover test method further includes simulating loss of main power supply outside the plant, to reduce the degree of association between the BAS54 test and grid-related work, and realize decoupling of BAS54 test from a grid-related operation. As shown in Fig. 8, the step of simulating loss of main power supply outside the plant includes:
                     disconnecting LGE001JA, LGF001JA via a main control room DCS under a hot shutdown working condition of the primary circuit of the unit;
                     after disconnecting LGE001JA, LGF001JA, the main control room DCS disconnecting LGA001JA and LGD001JA synchronously to trigger LGB/C switch to auxiliary standby transformer power supply automatically and synchronously;
                     continuing BAS54 test in auxiliary standby transformer power supply mode, and starting RCP001PO, CRF001PO , CEX001PO , SEN , SRI , CVI , CET , GGR , GHE auxiliary devices to maintain a hot shutdown working condition of the primary circuit and the vacuum condition of a condenser.

Referring to Fig. 9, a second embodiment of the present invention also provides an electrical power supply changeover test apparatus for a nuclear power plant including:
a configuration unit 210, for configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a power supply for a plant in an auxiliary standby transformer power supply mode;
a BAS56 test unit 220, for executing the BAS56 test, and obtaining a final state of the BAS56 test after the BAS56 test ends;
a fast power supply changeover unit 230, for realizing fast power cut-off and transmission between adjacent units of a common load for a plant of a nuclear power unit via fast power supply changeover technology which simulates automatic changeover in the final state of the BAS56 test; and
a BAS54 test unit 240, for executing the BAS54 test by taking the final state of the BAS56 test as the initial state of the BAS54 test.

The third embodiment of the present invention also provides an electrical power supply changeover test device for a nuclear power plant including a memory having a computer program stored therein and a processor, wherein the computer program can be executed by the processor to implement the electrical power supply changeover test method for nuclear power plant of the present invention as described above.

In the embodiments provided in the present invention, it should be understood that the device and method as disclosed can be realized in other ways. The apparatus and method embodiments described above are only illustrative, for example, the flowcharts and block diagrams in the drawings show possible architectures, functions, and operations of devices, methods, and computer program products according to embodiments of the present invention. Each box in a flowchart or block diagram can represent a module, program segment, or part of code, the module, the program segment, or a part of code contains one or more executable instructions for implementing a specified logical function. It should also be noted that, in alternative implementations of the present invention, the functions noted in the box can also occur in a different order than those noted in the attached drawings. For example, two contiguous boxes actually be executed in essentially parallel, can sometimes be executed in the opposite order, depending on the functionality involved. It should be also noted that each box in the block diagram and/or flowchart, and the combination of boxes in the block diagram and/or flowchart, can be implemented with a dedicated hardware-based system that performs a given function or action, or can do it with a combination of specialized hardware and computer instructions.

In addition, each functional module in each embodiment of the present invention can be integrated together to form an independent part. Each module can exist separatelly. It is also possible to integrate two or more modules to form an independent part.

The functions, if implemented in the form of software function modules and sold or used as stand-alone products, can be stored in a computer-readable storage medium. Therefore, the technical solution of the present invention can be embodied in the form of a software product in essence or a portion that contributes to the prior art or a portion of the technical solution. The computer software product is stored in a storage medium. A number of instructions are included to enable a computer device (which may be a personal computer, an electronic device, or a network device, etc.) to perform all or part of the steps of the method described in various embodiments of the present invention. The storage medium includes USB drives, removable hard drives, Read-Only Memory (ROM), Random-Access Memory (RAM) , diskettes or CDs, and a variety of other media that can store program code.

It should be noted that, in the description, the terms "include", "comprise" or any other variant thereof are intended to cover non-exclusive inclusion, so that a process, method, article, or device including a set of elements includes not only those elements but also other elements not explicitly listed. It may include elements inherent in such a process, method, article, or device. In the absence of any further restrictions, elements defined by the statement "including a..." do not exclude the existence of additional elements of the same in the process, method, object, or device that includes the elements.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. An electrical power supply changeover test method for a nuclear plant, **characterized in that** the electrical power supply changeover test method for a nuclear plant comprises the steps of:
(S101) configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a power supply for a plant in an auxiliary standby transformer power supply mode;
(S102) executing the BAS56 test, and obtaining a final state of the BAS56 test after the BAS56 test ends;
(S103) in the final state of the BAS56 test, realizing fast power cut-off and transmission between adjacent units of a common load for a plant of a nuclear power unit via fast power supply changeover technology which simulates automatic changeover; and
(S104) executing the BAS54 test by taking the final state of the BAS56 test as the initial state of the BAS54 test.

2. The electrical power supply changeover test method of claim 1, **characterized in that**, the step of executing the BAS56 test comprises:
disconnecting a 500kV ultra-high voltage switch of a normal power supply outside the plant;
starting GPA protection action, to switch the power supply for a plant to auxiliary standby transformer power supply automatically;
restoring the 500kV ultra-high voltage switch of the normal power supply outside the plant, restoring operation of the main transformer, and resetting the GPA protection; and
completing the BAS56 test.

3. The electrical power supply changeover test method of claim 1, **characterized in that**, for a public distribution panel 7LGI of the unit, the step of realizing fast power cut-off and transmission between adjacent units of a common load for a plant of a nuclear power unit via fast power supply changeover technology which simulates automatic changeover, comprises:
confirming that downstream medium voltage rotating load of 7LGI power supply has been stopped;
using a test box to verify 7LGIB001JA test bit opening and closing operation;
putting 7LGIB001JA in working position and preparing for fast power supply changeover operation;
disconnecting 7LGIA001JA and confirming electricity loss of 7LGI, closing 7LGIB001JA on the spot after a preset time, 7LGI reversing power to a LGC power supply of an adjacent unit for operation, wherein when 7LGIB001JA is not closed successfully, 7LGI fails to be switched to LGC power supply of an adjacent unit, the 7LGIA001JA switch has been disconnected and placed in an isolated position, to disconnect the DC power supply of the 7LGIA001JA switch and execute operation of powering 7LGI by 7LGIB;
restoring the downstream medium voltage rotating load of 7LGI power.

4. The electrical power supply changeover test method of claim 1, **characterized in that**, the step of executing the BAS54 test comprises:
operating LGA/D switch to auxiliary standby transformer power supply for operation, and starting a primary circuit device and a second circuit device in turn;
switching power supply for a plant back to auxiliary normal transformer power supply, restoring plant electrical devices, and restoring the unit to a thermoelectric shutdown state; and
completing the BAS54 test.

5. The electrical power supply changeover test method of claim 1, **characterized in that**, the electrical power supply changeover test method further comprises:
when temperature of the primary circuit drops to a warning value, activating RCP001PO via an auxiliary standby transformer to maintain the temperature of the primary circuit; and
if not feasible, restoring GEV to power medium voltage distribution system, so that operators can start one or more main pumps via a main power supply to maintain temperature and pressure of the primary circuit.

6. The electrical power supply changeover test method of claim 1, **characterized in that**, the electrical power supply changeover test method further comprises:
keeping LHP and LHQ emergency diesel generator in a hot standby state in initial state of the test, to ensure that when the power supply for a plant fails to switch to auxiliary standby transformer, LHP/LHQ emergency automatically start to power the main pump shaft seal and heat shield related devices.

7. The electrical power supply changeover test method of claim 6, **characterized in that**, when LGB fails to switch to the auxiliary standby transformer, the status of the unit is controlled via the steps of:
checking to confirm that LHA is powered by LHP emergency diesel generator for operation;
checking to confirm that RCV/RRI/SEC continue to run;
performing RCV and ASG regulation operation, to stabilize the temperature and the pressure of the primary circuit;
restoring LGB to be powered by auxiliary standby transformer;
restoring GEW/GEV power supply;
restoring power supply for a plant to be powered by normal power supply;
reconfiguring test conditions in accordance with the initial state to re-execute the test.

8. The electrical power supply changeover test method of claim 6, **characterized in that**, when LGC fails to switch to the auxiliary standby transformer, the status of the unit is controlled via the steps of:
checking to confirm that LHB is powered by LHQ emergency diesel generator;
checking to confirm that RCV/RRI/SEC continues to run;
performing RCV and ASG regulation operation, to stabilize the temperature and the pressure of the primary circuit;
restoring LGC to be powered by auxiliary standby transformer;
restoring GEW/GEV power supply;
restore power supply for a plant to be powered by normal power supply;
reconfiguring test conditions in accordance with the initial state to re-execute the test.

9. The electrical power supply changeover test method of claim 6, **characterized in that**, when LGB/LGC fail to switch to the auxiliary standby transformer, the status of the unit is controlled via the steps of:
checking to confirm that LHA is powered by a LHP emergency diesel generator;
checking to confirm that LHB is powered by a LHQ emergency diesel generator;
checking to confirm that RCV/RRI/SEC continues to run;
performing RCV and ASG regulation operation, to stabilize the temperature and the pressure of the primary circuit;
restoring LGB to be powered by auxiliary standby transformer;
restoring LGC to be powered by auxiliary standby transformer;
restoring GEW/GEV power supply;
restoring power supply for a plant to be powered by normal power supply;
reconfiguring test conditions in accordance with the initial state to re-execute the test.

10. The electrical power supply changeover test method of claim 6, **characterized in that**, when LHA fails to switch to LHP, the status of the unit is controlled via the steps of:
checking to confirm that LHB is powered by LHQ emergency diesel generator;
checking to confirm that RCV/RRI/SEC continues to run;
performing RCV and ASG regulation operation, to stabilize the temperature and the pressure of the primary circuit;
restoring LGB to be powered by auxiliary standby transformer;
restoring GEW/GEV power supply;
restoring power supply for a plant to be powered by normal power supply;
reconfiguring test conditions in accordance with the initial state to re-execute the test.

11. The electrical power supply changeover test method of claim 6, **characterized in that**, when LHB fails to switch to LHQ, the status of the unit is controlled via the steps of:
checking to confirm that LHA is powered by LHP emergency diesel generator;
checking to confirm that RCV/RRI/SEC continues to run;
performing RCV and ASG regulation operation, to stabilize the temperature and the pressure of the primary circuit;
restoring LGC to be powered by auxiliary standby transformer;
restoring GEW/GEV power supply;
restoring power supply for a plant to be powered by normal power supply;
reconfiguring test conditions in accordance with the initial state to re-execute the test.

12. The electrical power supply changeover test method of claim 6, **characterized in that**, when LHA/LHB fail to switch to LHP/LHQ, the unit enters a SBO working condition and the unit status of the unit is controlled via the steps of:
configuring RRI/SEC in two columns to run before the test, and putting standby functions between the columns into operation;
recording status of RCV device;
restoring LGB/LHA to be powered by auxiliary standby transformer, or restoring LGC/LHB to be powered by auxiliary standby transformer;
checking to confirm that RCV/RRI/SEC continues to run, otherwise starting manually;
checking seal injection flow of RCP pump, wherein if the main pump shaft seal water is not established within 2 min, do not establish shaft seal water;
performing RCV and ASG regulation operation, to stabilize the temperature and the pressure of the primary circuit;
continuing to restore other power supply series to be powered by auxiliary standby transformer;
restoring power supply for a plant to be powered by normal power supply;
reconfiguring test conditions in accordance with the initial state to re-execute the test.

13. The electrical power supply changeover test method of claim 4, **characterized in that**, the electrical power supply changeover test method further comprises simulating loss of main power supply outside the plant when BAS56 and Bas54 cannot be executed under a same task window, wherein the step of simulating loss of main power supply outside the plant comprises:
disconnecting LGE001JA, LGF001JA via a main control room DCS under a hot shutdown working condition of the primary circuit of the unit;
after disconnecting LGE001JA, LGF001JA, the main control room DCS disconnecting LGA001JA and LGD001JA synchronously to trigger LGB/C switch to auxiliary standby transformer power supply automatically and synchronously;
continuing BAS54 test in auxiliary standby transformer power supply mode, and starting RCP001PO, CRF001PO , CEX001PO , SEN , SRI , CVI , CET , GGR , GHE auxiliary devices to maintain a hot shutdown working condition of the primary circuit and the vacuum condition of a condenser.

14. An electrical power supply changeover test apparatus, **characterized in that**, the electrical power supply changeover test apparatus comprises:
a configuration unit (210), for configuring initial states of a BAS56 test and a BAS54 test in parallel, wherein in configuring the initial state of the BAS54 test, an available state of an auxiliary device for maintaining a hot shutdown working condition of a primary circuit and a vacuum condition of a condenser meets an auxiliary device startup requirement of a power supply for a plant in an auxiliary standby transformer power supply mode;
a BAS56 test unit (220), for executing the BAS56 test, and obtaining a final state of the BAS56 test after the BAS56 test ends;
a fast power supply changeover unit (230), for realizing fast power cut-off and transmission between adjacent units of a common load for a plant of a nuclear power unit via fast power supply changeover technology which simulates automatic changeover in the final state of the BAS56 test; and
a BAS54 test unit (240), for executing the BAS54 test by taking the final state of the BAS56 test as the initial state of the BAS54 test.

15. An electrical power supply changeover test device, **characterized in that**, the electrical power supply changeover test device comprises a memory having a computer program stored therein and a processor, wherein the computer program can be executed by the processor to implement the electrical power supply changeover test method for nuclear power plant of anyone of claims 1 to 13.
